(19) **Europäisches Patentamt**

**European Patent Office**

**Office européen des brevets**

(11) **EP 0 716 105 B1**

(12) **EUROPÄISCHE PATENTSCHRIFT**

(45) Veröffentlichungstag und Bekanntmachung des Hinweises auf die Patenterteilung:
**04.10.2001 Patentblatt 2001/40**

(51) Int Cl.[7]: **C08G 2/24**

(21) Anmeldenummer: **95118351.6**

(22) Anmeldetag: **22.11.1995**

(54) **Acetalcopolymere mit verbesserten mechanischen Eigenschaften**

Acetal copolymers having improved mechanical properties

Copolymères d'acétal ayant des propriétés mécaniques améliorées

(84) Benannte Vertragsstaaten:
**ES FR GB**

(30) Priorität: **05.12.1994 DE 4443150**

(43) Veröffentlichungstag der Anmeldung:
**12.06.1996 Patentblatt 1996/24**

(73) Patentinhaber: **Ticona GmbH**
**65451 Kelsterbach (DE)**

(72) Erfinder:
• **Hoffmockel, Michael, Dr.**
**D-65527 Niedernhausen (DE)**
• **Fleischer, Dietrich, Dr.**
**D-64287 Darmstadt (DE)**
• **Sextro, Günter, Dr.**
**D-65207 Wiesbaden (DE)**

(56) Entgegenhaltungen:
**EP-A- 0 080 656          EP-A- 0 591 828**
**EP-A- 0 638 599          DE-A- 2 263 300**

• **JOURNAL OF APPLIED POLYMER SCIENCE, Bd. 26, 1981, Seiten 2743-2750, XP002037590 SHIN'ICHI ISHIDA:**
• **PLASTE UND KAUTSCHUK, Bd. 14, Nr. 11, 1967, Seiten 795-797, XP002037591 H. GROHN ET AL.:**
• **DIE ANGEWANDTE MAKROMOLEKULARE CHEMIE, Bd. 228, 1995, Seiten 185-200, XP002037592 D. BRAUN ET AL.:**
• **CHEMICAL ABSTRACTS, vol. 74, no. 2, 11.Januar 1971 Columbus, Ohio, US; abstract no. 3872, XP002037593 & ATTI CONGR. INT. MATER. PLAST. ELASTOMERICHE, 1969, Seiten 118-124, J. ACKERMANN:**

**Beschreibung**

Die Erfindung betrifft Acetalcopolymere mit verbesserten mechanischen Eigenschaften in einem Schmelzbereich MFI 190/2,16 von 1 bis 5 g/10 min.

Acetalcopolymere hergestellt aus Trioxan und cyclischen Acetalen als Comonomer sind bereits bekannt. Für bestimmte Anwendungsfälle sind jedoch ihre Zähigkeitseigenschaften nicht ausreichend. Es wurden deshalb vernetzte, unvernetzte oder auch gepfropfte Elastomere in die Acetalcopolymermatrix eingearbeitet (siehe: Becker/Braun, Kunststoff-Handbuch, Band 3/1, München, Wien 1992, S. 327 bis 329). Die Zähigkeitseigenschaften werden zwar verbessert, aber die Herstellung und Verarbeitung dieser Polymermassen bringt Probleme mit sich und ist aufwendig.

Eine Möglichkeit, ohne Zumischung von Fremdstoffen auszukommen, wird in der EP-A 591 828 beschrieben. Hier wird der Weg zu besonders kleinen Schmelzindizes unter 0,8 g/10 min beschritten. Die so erhaltenen Produkte stellen bei der Herstellung besondere Reinheitsanforderungen an die Monomeren und erfordern aufgrund ihrer hohen Schmelzeviskosität schonende Verarbeitungsbedingungen. Ein weiterer Nachteil aller oben aufgeführten Produkte ist, daß der Zähigkeitsgewinn mit einer Einbuße der Steifigkeit verbunden ist.

Es bestand die Aufgabe ein Acetalcopolymer mit verbesserten Zähigkeitseigenschaften ohne die oben genannten Nachteile zu finden.

Die Aufgabe wird dadurch gelöst, daß die erfindungsgemäßen Acetalcopolymere im Schmelzindexbereich MFI 190/2,16 von 1 bis 5 g/10 min eine unimodale Molmassenverteilung aufweisen und als Comonomer 0,3 bis 0,9 Mol-%, vorzugsweise 0,4 bis 0,7 Mol-%, eines cyclischen Acetals enthalten.

Als Comonomer wird vorzugsweise 1,3-Dioxolan eingesetzt. Bei einem Schmelzindexbereich MFI 190/2,16 von 1,5 bis 3,5 g/10 min weisen die erfindungsgemäßen Acetalcopolymere vorzugsweise einen Comonomerengehalt von 0,4 bis 0,7 Mol-%, besonders bevorzugt von 0,5 bis 0,6 Mol-%, auf.

Das Kriterium "unimodale Molmassenverteilung" soll im Rahmen der vorliegenden Erfindung bedeuten, daß die Molmasse der Polymeren, die Bedingung:

$$1,8 \leq M_w/M_n \leq 2,2$$

erfüllt.

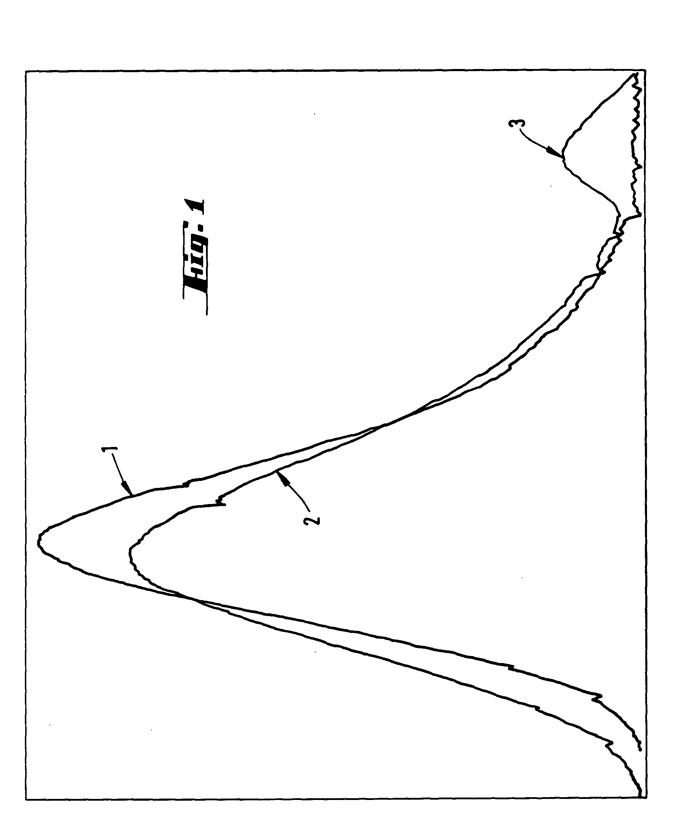

**Figur 1** verdeutlicht diesen Zusammenhang. Mit der Methode der Gelpermeationschromatographie wurden bei einer Temperatur von 150 °C in Dimethylacetamid die Molmassen verschiedener Polyacetale gegenüber einem Polystyrolstandard bestimmt. Mit der Bezugsziffer 1 ist die Meßkurve an einem Polyacetal gemäß Beispiel 1 bezeichnet, die zu einem Verhältnis $M_w/M_n$ von 1,9 führt, während mit der Bezugsziffer 2 die Meßkurve an einem Polyacetal des Vergleichsversuchs V2 bezeichnet ist, die zu einem Verhältnis $M_w/M_n$ von 2,9 führt. Das Polyacetal des Vergleichsversuchs V2 enthält herstellungsbedingt einen niedermolekularen Anteil, der in der Meßkurve 2 durch das Maximum 3 sichtbar wird.

Mit den erfindungsgemäßen Acetalcopolymeren werden ohne zusätzliche Arbeitsschritte zur Einarbeitung von Blendkomponenten überraschenderweise verbesserte Zähigkeit verbunden mit höherer Steifigkeit erreicht. Weiterhin erreichen die mechanischen Eigenschaften nahezu die Werte von Homopolymeren unter Beibehaltung der thermischen Stabilität der Copolymere. Gegenüber den bekannten besonders hochmolekularen Copolymeren weisen die erfindungsgemäßen Copolymere eine geringere Schmelzviskosität auf, sind einfacher herzustellen, besser zu verarbeiten und erreichen eine höhere Steifigkeit.

Ausführungsbeispiel

Die Erfindung wird nachfolgend an einem Ausführungsbeispiel näher erläutert:

Die erfindungsgemäßen Acetalcopolymere lassen sich beispielsweise herstellen durch Copolymerisation von Dioxolan und Trioxan in homogener Phase nach einem Verfahren, welches in EP 638357 (= DE 43 27 246.0) beschrieben ist. Trioxan mit 0,55 Mol-% Dioxolan wurde bei 155°C in einem Rohrreaktor, welcher mit statischen Mischern ausgerüstet ist, durch Initiierung mit Trifluormethansulfonsäure copolymerisiert. Nach Abschluß der Polymerisation wurde direkt anschließend durch Zusatz von 0,3 % Triethylamin der Abbau der instabilen Kettenenden vorgenommen. Am Reaktorausgang wurde das Produkt auf Normaldruck entspannt; die Restmonomeren verdampfen weitgehend. Anschließend wurde das Produkt grob gemahlen, mit Methanol ausgekocht, mit den üblichen Stabilisatoren versetzt und granuliert.

Die mechanischen Eigenschaften daraus hergestellter Prüfkörper wurden gemessen. Die Ergebnisse sind im Vergleich zu handelsüblichen Homopolymeren (V1) und Copolymeren (V2) sowie einem nach gleichem Verfahren, aber mit gängigem Comonomergehalt von 1,6 Mol-%, hergestellten Polymer (V3), in der nach folgenden Tabelle zusammengestellt:

Tabelle:

|  | Beispiel | Vergleich 1 | Vergleich 2 | Vergleich 3 |
|---|---|---|---|---|
| Schmelzindex 190/2,16 [g/10min][1] | 2,4 | 2,5 | 2,7 | 2,5 |
| Biege-E-Modul [MPa][2] | 2916 | 2848 | 2737 | 2557 |
| Reißdehnung [%][3] | 38,3 | 24,6 | 23,4 | 34,2 |
| Schlagzähigkeit, Izod [mJ/m$^2$][4]<br>ohne Bruch [%] | ---<br>100 | 125<br>80 | 115<br>70 | 138<br>80 |
| Schlagzähigkeit, Charpy [mJ/m$^2$][5]<br>ohne Bruch [%] | 250<br>80 | 262<br>50 | 246<br>40 | 281<br>40 |

[1]gemessen nach DIN 53735
[2]gemessen nach DIN 59452
[3]gemessen nach DIN 53455
[4]gemessen nach ISO 180
[5]gemessen nach ISO 179

**Patentansprüche**

1. Acetalcopolymer mit verbesserten mechanischen Eigenschaften im Schmelzindexbereich MFI 190/2,16 von 1 bis 5 g/10 min, **dadurch gekennzeichnet, daß** es eine unimodale Molmassenverteilung aufweist und als Comonomer 0,3 bis 0,9 Mol-% eines cyclischen Acetals enthält.

2. Acetalcopolymer gemäß Anspruch 1, **dadurch gekennzeichnet, daß** es einen Schmelzindexbereich MFI 190/2,16 von 1,5 bis 3,5 g/10 min und einen Comonomergehalt von 0,4 bis 0,7 Mol-% aufweist.

3. Acetalcopolymer gemäß Ansprüchen 1 und 2, **dadurch gekennzeichnet, daß** der Comonomergehalt vorzugsweise 0,5 bis 0,6 Mol-% beträgt.

4. Acetalcopolymer gemäß den Ansprüchen 1 bis 3, **dadurch gekennzeichnet, daß** es als Comonomer 1,3-Dioxolan enthält.

**Claims**

1. An acetal copolymer having improved mechanical properties in the melt flow index range MFI 190/2.16 of 1 to 5 g /10 min, which has a monomodal molecular weight distribution and contains, as a comonomer, 0.3 to 0.9 mol% of a cyclic acetal.

2. The acetal copolymer as claimed in claim 1, which has a melt flow index range MFI 190/2.16 of 1.5 to 3.5 g/10 min and has a comonomer content of 0.4 to 0.7 mol%.

3. The acetal copolymer as claimed in claims 1 and 2, wherein the comonomer content is preferably 0.5 to 0.6 mol%.

4. The acetal copolymer as claimed in any of claims 1 to 3, which contains 1,3-dioxolane as a comonomer.

**Revendications**

1. Copolymère d'acétal à propriétés mécaniques améliorées dans la plage d'indices de fluidité à chaud MFI 190/2,16 de 1 à 5 g/10 min, **caractérisé en ce qu'**il présente une distribution unimodale de masses moléculaires et contient en tant que comonomère 0,3 à 0,9 % en moles d'un acétal cyclique.

2. Copolymère d'acétal selon la revendication 1, **caractérisé en ce qu'**il présente une plage d'indices de fluidité à chaud MFI 190/2,16 de 1,5 à 3,5 g/10 min et une teneur en comonomère de 0,4 à 0,7 % en moles.

**3.** Copolymère d'acétal selon les revendications 1 et 2, **caractérisé en ce que** la teneur en comonomère va de préférence de 0,5 à 0,6 % en moles.

**4.** Copolymère d'acétal selon les revendications 1 à 3, **caractérisé en ce qu'**il contient en tant que comonomère du 1,3-dioxolanne.

Fig. 1

EP 0 716 105 B1